Europäisches Patentamt

European Patent Office

Office européen des brevets

(19)

(11) Numéro de publication: **0 194 933 B1**

(12) **FASCICULE DE BREVET EUROPEEN**

(45) Date de publication de fascicule du brevet:
29.05.91

(51) Int. Cl.⁵: **G01V 5/02**

(21) Numéro de dépôt: **86400476.7**

(22) Date de dépôt: **06.03.86**

(54) **Procédé d'obtention de cartes représentatives de l'activité gamma d'une zone survolée, et dispositif pour la mise en oeuvre du procédé.**

(30) Priorité: **08.03.85 FR 8503431**

(43) Date de publication de la demande:
**17.09.86 Bulletin 86/38**

(45) Mention de la délivrance du brevet:
**29.05.91 Bulletin 91/22**

(84) Etats contractants désignés:
**BE CH DE FR GB IT LI SE**

(56) Documents cités:
**FR-A- 78 107**
**US-A- 2 986 638**

**INTERNATIONAL JOURNAL OF APPLIED RA-DIATION & ISOTOPES, vol. 34, no. 1, janvier 1983, pages 199-229, Pergamon Press Ltd., Oxford, GB; Q. BRISTOW: "Airborne gamma-ray spectrometry in uranium exploration. Principles and current practice"**

(73) Titulaire: **COMMISSARIAT A L'ENERGIE ATO-MIQUE Etablissement de Caractère Scientifi-que Technique et Industriel**
**31/33, rue de la Fédération**
**F-75015 Paris(FR)**

(72) Inventeur: **Rosenberg, André**
**29 rue des Pins**
**F-21120 Is Sur Tille(FR)**

(74) Mandataire: **Mongrédien, André et al**
**c/o BREVATOME 25, rue de Ponthieu**
**F-75008 Paris(FR)**

**Description**

La présente invention concerne un procédé d'obtention de cartes représentatives de l'activité gamma d'une zone survolée, ainsi qu'un dispositif pour la mise en oeuvre du procédé.

L'invention s'applique à la localisation de sources radioactives, notamment dans des zones géographiques contaminées.

On sait acquérir des données représentant l'activité gamma d'une zone survolée, grâce à des moyens d'acquisition embarqués sur un appareil de locomotion aérienne tel qu'un hélicoptère ou un avion. L'appareil survole une zone déterminée, selon une trajectoire préalablement définie permettant de balayer l'ensemble de cette zone, par exemple suivant des directions parallèles et équidistantes, à une altitude prédéterminée.

Ainsi, pour une altitude de consigne de 40 m on choisit généralement une distance de 60 m à 80 m entre les différentes directions ou profils d'une trajectoire, cette distance étant ramenée à 25 m ou 30 m lors d'une analyse plus précise de la zone survolée.

A bord de cet appareil, les moyens d'acquisition permettent de mesurer et d'enregistrer, environ toutes les secondes, en des points d'acquisition ou de mesure répartis sur l'ensemble de la trajectoire suivie par l'appareil, les références des points d'acquisition (par exemple leur numéro), les positions de l'appareil dans un repère X,Y lié à la surface du sol, l'altitude Z de l'appareil, et l'activité gamma de n'importe quel radioélément émetteur gamma en ces points.

Les données de positionnement en X et Y sont obtenues à partir de moyens permettant d'interroger au moins trois balises, celles-ci étant disposées dans la zone survolée, en des points dont on connaît les coordonnées dans un système de référence quelconque, tel qu'en coordonnées Lambert ou U.T.M. (Universal Transverse Mercator). Ces moyens comprennent notamment un récepteur de mesure à bord de l'appareil, ce récepteur permet de mesurer les distances entre les balises et l'appareil. Ces mesures sont traitées en temps réel, par un calculateur à bord de l'appareil, de façon à obtenir les coordonnées de l'appareil, dans le système de coordonnées choisi.

Dans le même temps, à partir des coordonnées calculées, le calculateur commande un boîtier de navigation placé devant le pilote ; ce boîtier indique l'écart entre la trajectoire suivie et la trajectoire prédéterminée. Le pilote peut ainsi corriger en permanence la trajectoire suivie de façon à survoler la zone à étudier suivant des directions pratiquement parallèles et équidistantes.

L'altitude de l'appareil est indiquée en permanence au pilote, par un altimètre radar par exemple ; l'appareil doit en effet survoler la zone étudiée à une altitude prédéterminée. Cet altimètre est connecté au calculateur qui enregistre pour chaque point de mesure, l'altitude réelle par rapport au sol de l'appareil, afin de disposer des coordonnées en X, Y et Z, en temps réel, pour l'ensemble des points de mesure.

Les mesures d'activité gamma sont effectuées en chaque point de mesure par un détecteur disposé sous l'appareil ; ce détecteur est relié à des moyens embarqués permettant de recevoir les impulsions électriques qu'il fournit et de coder et classer ces impulsions selon un spectre de 256 canaux par exemple.

L'acquisition de données de position et de données spectrométriques est donc effectuée par le calculateur qui recueille, pour chaque point de mesure, les valeurs pour les 256 canaux constituant le spectre gamma de ce point, ainsi que ses coordonnées en X, Y et Z. Le calculateur enregistre l'ensemble de ces données dans une mémoire, notamment de masse, telle qu'une cassette, une disquette ou une bande magnétique, pour avoir une totale disponibilité de ces données pour des traitements ultérieurs.

De façon connue, le traitement des données enregistrées est généralement effectué au sol par un calculateur tel qu'un micro-ordinateur, à partir d'un logiciel de traitement permettant par des moyens de visualisation connectés au calculateur l'obtention de cartes représentant l'activité gamma de la zone survolée. Le traitement des données est très long à cause de leur nombre très important. Ainsi, pour une zone survolée de quelques kilomètres carrés, le traitement des données dure plusieurs heures. Par ailleurs, les moyens de visualisation utilisés ne permettent pas de mettre en évidence de faibles anomalies. C'est précisément le cas du dispositif décrit dans la revue intitulée "International Journal of Applied Radiation Isotopes" - volume 34 - n° 1 - pages 199-229 (1983). Le préambule des revendications 1 et 6 est dérivé de ce document.

L'invention a pour but de remédier à ces inconvénients et notamment de traiter les données enregistrées de façon à avoir une masse de données très inférieures à celles enregistrées en vol et directement exploitables pour obtenir des cartes représentatives de l'activité gamma de la zone survolée beaucoup plus rapidement, et d'utiliser des moyens de visualisation vidéo permettant de mettre en évidence de faibles anomalies.

De façon plus précise, l'invention vise tout d'abord un procédé d'obtention de cartes représentatives de l'activité gamma d'une zone géographique, à partir de données enregistrées, acquises par des moyens d'acquisition à bord d'un appareil de locomotion aérienne, pour différents points d'une trajectoire de l'appareil balayant cette zone, selon des directions approximativement parallèles, ces données comprenant, pour chaque point d'acquisition, des données relatives aux coordonnées de positionnement et à l'altitude de l'appareil dans un repère de référence X, Y, Z et des données de mesures spectrométriques de l'activité gamma, ce procédé consistant à :

- lire les données enregistrées grâce à des moyens de lecture reliés à des moyens de traitement ;
- visualiser sur un écran vidéo, relié aux moyens de traitement, des données spectrométriques lues donnant le nombre d'impulsions en fonction de l'activité gamma pour chaque point d'acquisition positionné selon ses coordonnées dans le repère de référence ;
- déterminer un nombre déterminé de fenêtres d'énergie ;
- effectuer à partir des données lues et par les moyens de traitement pour chaque point d'acquisition, le comptage du nombre d'impulsions contenues dans chaque fenêtre déterminée et le comptage total du nombre d'impulsions correspondant à l'ensemble de l'activité gamma en ce point ;
- enregistrer par des moyens d'enregistrement, pour chaque point d'acquisition, une partie des données de position et d'altitude lues, la valeur de comptage correspondant aux fenêtres déterminées et la valeur de comptage totale ;
- affecter à chaque point d'acquisition la valeur de comptage obtenue pour une des fenêtres déterminées ou la valeur de comptage totale correspondant à ce point, à partir d'une loi de couleurs, ladite loi permettant d'attribuer une couleur différente à différents intervalles de valeurs de comptage choisis ; et
- interpoler, par les moyens de traitement, les valeurs de comptage entre les points d'acquisition se trouvant sur un même profil de la trajectoire de l'appareil et se trouvant sur des profils différents de la trajectoire, pour obtenir une image continue ; caractérisé en ce qu'il consiste en outre :
- à déterminer ledit nombre déterminé de fenêtres d'énergie à partir de la visualisation de données spectrométriques affichées sur l'écran vidéo, chaque fenêtre correspondant au plus à une énergie du rayonnement gamma d'un radio-élément ;
- à positionner les points d'acquisition sur l'écran vidéo, par leurs coordonnées en X et Y dans le repère de référence ;
- à enregistrer par lesdits moyens d'enregistrement, pour chacun desdits points d'acquisition, une partie des données compactées de position et d'altitude lues, à affecter à chacun desdits points d'acquisition sur l'écran vidéo ladite valeur de comptage à partir de ladite loi de couleurs, à interpoler lesdites valeurs de comptage linéairement pour produire ladite image continue sur ledit écran vidéo ; et
- à effectuer des corrections d'altitude à chaque point de l'image obtenue, à partir d'un coefficient d'atténuation calculé par les moyens de traitement à partir de données enregistrées à bord de l'appareil au cours du survol d'un point d'acquisition suivant un profil vertical, ledit coefficient étant calculé pour chaque fenêtre d'énergie déterminée et pour l'ensemble de l'activité gamma en ce point et permettant de ramener les valeurs affectées aux points de l'image correspondant à l'altitude réelle de l'appareil à des valeurs correspondant à une altitude de référence choisie.

L'invention a aussi pour objet un dispositif pour la mise en oeuvre du procédé, et comportant :

- des moyens de traitement de données enregistrées sur l'activité gamma d'une zone géographique, acquises par des moyens d'acquisition à bord d'un appareil de locomotion aérienne, pour différents points d'acquisition de la trajectoire de l'appareil, ces données comprenant pour chaque point des données correspondant aux coordonnées de positionnement et à l'altitude de l'appareil dans un repère de référence X, Y, Z et des données spectrométriques de l'activité gamma correspondant à un nombre d'impulsions en fonction de l'activité gamma en chaque point d'acquisition, ces moyens de traitement permettant d'obtenir la répartition de l'activité gamma de la zone survolée pour une fenêtre d'énergie donnée ou pour l'ensemble de l'activité gamma, chaque point d'acquisition étant affecté de la valeur de comptage obtenue pour la fenêtre déterminée ou de la valeur de comptage totale en ce point, en relation avec une loi de couleurs permettant d'attribuer respectivement différentes couleurs à différents intervalles choisis de valeurs de comptage, les moyens de traitement effectuant une interpolation des valeurs de comptage entre les points d'acquisition se trouvant sur un même profil de la trajectoire de l'appareil et les points se trouvant sur des profils différents de la trajectoire, pour obtenir une image continue ;
- des moyens pour lire les données enregistrées et pour enregistrer des données traitées par les moyens de traitement à partir des données lues, les moyens pour lire et pour enregistrer étant connectés aux moyens de traitement ;

- des moyens de visualisation vidéo pour visualiser des données spectrométriques lues et pour afficher des cartes de l'activité gamma de la zone survolée, ces moyens étant connectés aux moyens de traitement ;
- des moyens de commande reliés aux moyens de traitement ;
- une imprimante ; et
- une caméra vidéo reliée aux moyens de traitement pour saisir l'image d'une carte topographique de la zone survolée et pour superposer cette carte aux cartes de l'activité gamma de la zone survolée ;

caractérisé en ce que les moyens de commande reliés aux moyens de traitement font varier les couleurs de l'écran vidéo, en ce que les moyens de traitement effectuent un compactage des données de positionnement et d'altitude préalablement à leur enregistrement, et en ce que ladite interpolation est une interpolation linéaire apportant ladite image continue sur l'écran des moyens de visualisation vidéo, et/ou sur l'imprimante.

D'autres caractéristiques et avantages de l'invention ressortiront mieux de la description qui va suivre, donnée à titre purement illustratif et non limitatif, en référence aux figures annexées 1 à 2c dans lesquelles :

- la figure 1 représente schématiquement un dispositif permettant la mise en oeuvre du procédé d'obtention de cartes conforme à l'invention ;
- la figure 2a représente, pour une zone survolée par un appareil de locomotion aérienne, le positionnement sur un écran, des différents points de mesure relevés sur la trajectoire de l'appareil,
- la figure 2b représente l'affectation d'une valeur d'intensité pour une fenêtre d'énergie choisie, pour chaque point de mesure puis pour l'ensemble des points de l'écran situés sur la trajectoire,
- la figure 2c représente la carte complète de l'intensité de rayonnements pour cette fenêtre d'énergie choisie, cette carte étant obtenue par interpolation linéaire.

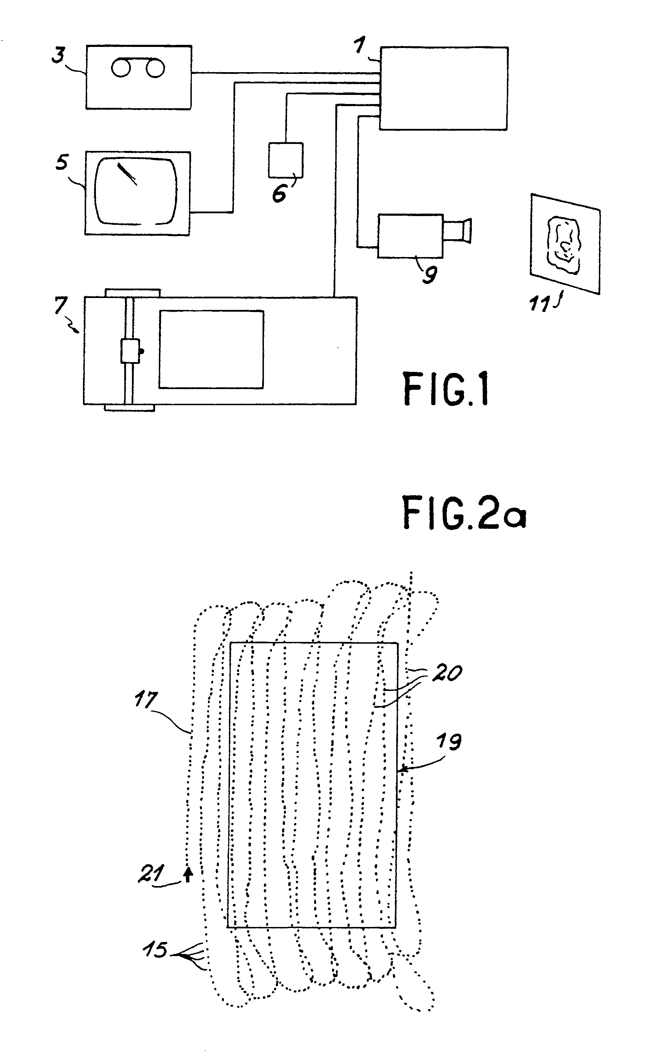

La figure 1 représente le dispositif de mise en oeuvre du procédé d'obtention de cartes à partir de données enregistrées, acquises à partir d'un appareil de locomotion aérienne, en des points de mesure répartis sur sa trajectoire, ces données étant enregistrées dans une mémoire, par exemple une mémoire de masse.

On distingue sur cette figure, un lecteur-enregistreur 3, connecté à un calculateur 1 tel qu'un micro-ordinateur, permettant de lire et d'enregistrer des données, un écran vidéo 5 et une imprimante 7 également connectés au calculateur 1 et permettant de visualiser des résultats, et une caméra 9 connectée au calculateur 1 et permettant la saisie d'une carte topographique 11 de la zone survolée pour sa superposition avec une carte de l'activité gamma de la zone survolée. Par ailleurs, des moyens de commande 6 reliés au calculateur permettent de commander les variations de couleur de l'écran vidéo. Ces moyens de commande 6 peuvent être manuels comme représenté sur cette figure, ce qui correspond en terminologie anglo-saxonne à un "track-ball", ou automatiques lorsque les moyens de commande sont intégrés au calculateur 1.

Le calculateur 1 permet de commander ces différents éléments et de gérer les différentes étapes du procédé d'obtention de cartes.

Le lecteur-enregistreur 3 utilisé est bien entendu de même type que celui ayant permis d'enregistrer les données à bord de l'appareil de locomotion aérienne. Ainsi, si les données ont été enregistrées sur des bandes magnétiques, ce dispositif comprend un lecteur-enregistreur de bandes magnétiques.

Comme indiqué plus haut, ces enregistrements comprennent différentes données telles que des références, des données spectrométriques pour les différents points d'acquisition ou de mesure et, des données relatives aux coordonnées de positions et d'altitude, relevées pour chacun de ces points dans un repère (X, Y, Z). Les données spectrométriques, pour chaque point de mesure, sont enregistrées sous la forme d'un spectre de rayonnement gamma, c'est-à-dire sous forme d'un nombre d'impulsions ou coups par seconde, en fonction de l'énergie de rayonnement. Cette énergie de rayonnement est répartie en 256 canaux, chaque canal représentant un intervalle d'énergie prédéterminée. Ainsi, pour des spectres dont l'énergie varie de 0 à 2,5 MeV, chaque canal présente une énergie voisine de 10keV.

Les données enregistrées sont lues par le lecteur-enregistreur 3 et les données spectrométriques sont visualisée sur l'écran 5 sous forme de spectres.

Ainsi, un écran vidéo comportant par exemple 256x256 points images permet l'impression de 256 lignes de 256 points images chacune. Chaque ligne correspond au spectre d'un point d'acquisition, autrement dit à chaque canal du spectre d'un point d'acquisition correspond un point image d'une ligne. La valeur des différents canaux d'un spectre est traduite par l'affectation de couleurs différentes aux points images correspondants, suivant une loi de couleurs déterminée. L'oeil d'un opérateur n'étant pas assez sensible à 256 couleurs différentes, cette loi affecte des couleurs à des intervalles de valeurs.

L'ensemble des spectres visualisés sur l'écran vidéo permet de mettre en évidence certaines anomalies de couleurs présentées par certains d'entre eux. Un opérateur fait alors afficher sur l'écran vidéo par le calculateur les histogrammes des spectres présentant les anomalies les plus importantes afin d'étudier par simple visualisation de l'écran, le nombre d'impulsions correspondant aux différents radio-éléments émetteurs gamma présents dans la zone étudiée.

L'opérateur peut ainsi définir des fenêtres d'énergie comprenant les nombres d'impulsions (ou pics) les plus significatifs de ces spectres, chaque fenêtre correspondant au plus à un seul radio-élément. Généralement, on choisit un nombre de fenêtres égal à huit. Pour étudier le niveau du bruit de fond, c'est-à-dire la radioactivité naturelle de la zone survolée, l'opérateur peut également choisir des fenêtres de référence représentatives de la radioactivité naturelle.

Pour tenir compte d'une dérive éventuelle des pics des radio-éléments lors de l'acquisition des données spectrométriques, une fenêtre d'énergie est choisie de façon englober plusieurs canaux, afin que le pic d'un radio-élément donné soit toujours compris dans la fenêtre lui correspondant. Ainsi, pour le radio-élément $Cs^{137}$ (césium) dont l'énergie de rayonnement est de l'ordre de 660 keV, on choisit par exemple une fenêtre comprise entre 640 et 680 keV comportant donc quatre canaux de 10 KeV.

Si la dérive des pics est très importante, on effectue ce traitement de façon répétée en déplaçant successivement les fenêtres pour encadrer entièrement chaque pic d'un radio-élément par une fenêtre.

Après avoir défini les fenêtres et fourni au calculateur 1 les valeurs d'énergie qui leur correspondent, l'opérateur commande ce calculateur pour que celui-ci ne retienne que les résultats directement exploitables. Le calculateur effectue en particulier, à partir des données lues pour chaque point d'acquisition, le comptage des impulsions contenues dans chaque fenêtre d'énergie retenue et le comptage total des impulsions correspondant à ce point.

Les valeurs de comptage obtenues ainsi qu'une partie des références et des données de position et d'altitude sont alors enregistrées pour chaque point d'acquisition dans une mémoire vive du calculateur 1 ou éventuellement dans une mémoire de masse.

Par ailleurs, les données lues comprennent également des données spectrométriques et d'altitude pour un point de mesure particulier au cours duquel l'appareil a effectué un profil vertical. Ces données permettent, comme on le verra ultérieurement, d'effectuer des corrections d'altitude. Le calculateur effectue pour ces données le comptage des impulsions contenues dans chaque fenêtre et le comptage total pour chaque mesure effectuée au-dessus de ce point ; les valeurs de comptage obtenues ainsi qu'une partie des références de ce point et des données de position et d'altitude sont également enregistrées.

Cette méthode dite "de comptactage des données" permet d'éviter un accès et un traitement d'une grande quantité de données disponibles, qui nécessiteraient une mémoire de masse à accès rapide et une puissance de calcul importante. Ainsi, par exemple pour une opération d'acquisition durant 1h30 pour 5000 points de mesure comprenant chacun 640 octets d'information, la masse totale des données à traiter est de $3,2.10^6$ octets. Sur ces 640 octets, 16 octets correspondent par exemple aux références du point de mesure, 96 octets aux données de position et d'altitude, 512 au spectre et les 16 derniers constituent une réserve.

Par la méthode de compactage selon l'invention, on ramène les 640 octets d'information à 32 octets par exemple, soit un compactage d'un facteur 20. Ces 32 octets comportent 4 octets pour référencer le point de mesure, 6 octets pour les données de position et d'altitude, 16 octets pour les valeurs de comptage effectuées dans huit fenêtres d'énergie déterminées et 2 octets pour la valeur de comptage total.

A partir de l'ensemble des données compactées, l'opérateur peut obtenir très rapidement sur l'écran vidéo 5, par l'intermédiaire du calculateur 1, des cartes de l'activité gamma de la zone survolée. Une carte de l'activité gamma est représentative soit d'une fenêtre d'énergie déterminée, soit de l'ensemble de l'activité gamma de la zone survolée.

Pour décrire le procédé permettant d'afficher une carte sur l'écran vidéo, on basera la description sur une carte de l'activité gamma représentative d'une fenêtre d'énergie donnée, étant bien entendu que le procédé s'applique également à l'obtention de cartes représentatives de l'ensemble de l'activité gamma.

Afin que chaque point de mesure puisse être reporté sur l'écran vidéo comportant par exemple 256x256 points image, une échelle en mètres par point image est choisie. Chaque point de mesure est alors positionné sur l'écran en fonction de l'échelle choisie et de ses coordonnées de position (X, Y). La trajectoire de l'appareil de locomotion aérienne est alors visualisé. Une interpolation linéaire, effectuée par le calculateur 1, entre les points de mesure situés sur un même profil, permet ensuite de corriger la position des points de mesure, considéré comme erronée, compte tenu du vol de l'appareil de locomotion aérienne.

Après implantation des points de mesure sur l'écran, chacun d'entre eux est chargé avec la valeur de comptage correspondante, pour la fenêtre d'énergie choisie. Pour cela, une loi de couleurs permet d'affecter une couleur à chaque intervalle de valeurs distinct, compris dans l'ensemble des valeurs de comptage. On entend par couleurs aussi bien des couleurs réelles que des niveaux de gris différents ou des caractères alphanumériques.

Ainsi, par exemple, pour des valeurs de comptage variant de 0 à z, on peut choisir une loi de couleurs comportant quatre couleurs telles que pour des valeurs comprises entre 0 et x, x et x+y, x+y et x+2y, x+2y et x+3y, x+3y et x+4y, et enfin x+4y et z, (x et y étant inférieurs à z), les points image correspondant soient noir, jaune, vert, bleu, rouge et noir ; le noir est considéré comme une absence de couleur. Une loi de couleurs est définie notamment par son origine N et par son étendue W. Pour la loi décrite précédemment, on a : N = x et W = x+4y-N = 4y, chaque intervalle de valeur choisi ayant une étendue y. Cette loi est linéaire, mais elle peut, bien entendu, être non linéaire.

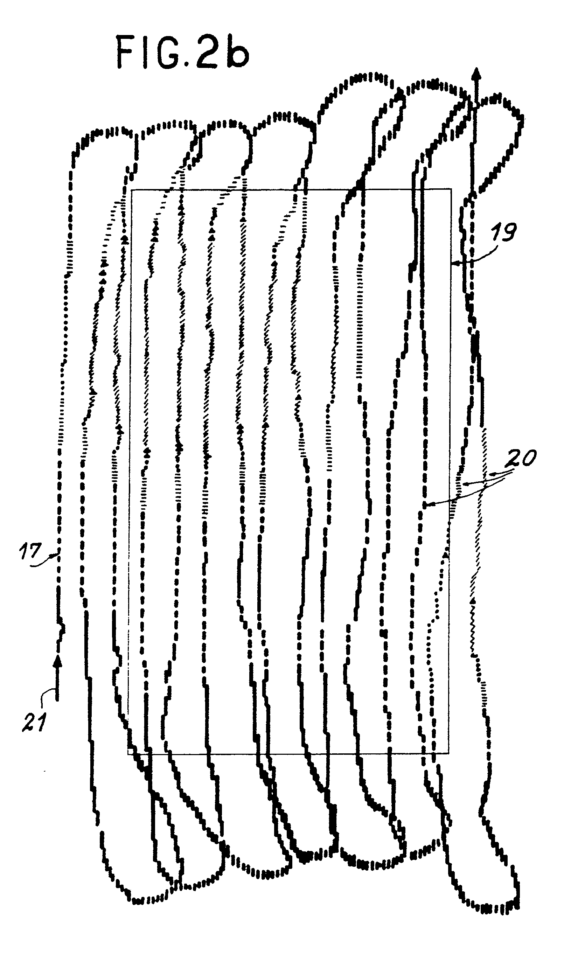

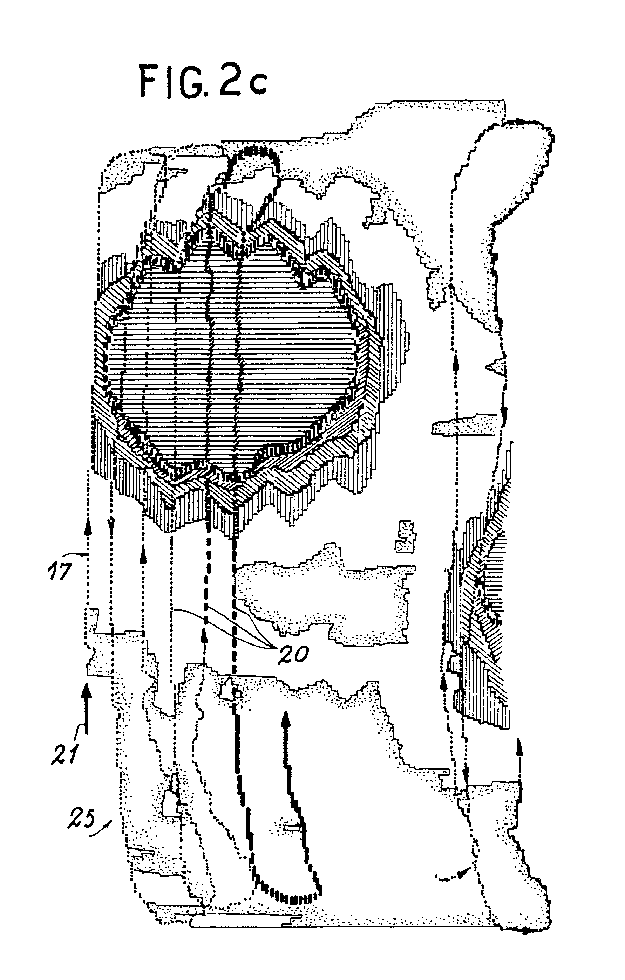

Pour obtenir une carte continue de l'activité gamma pour une fenêtre d'énergie donnée, le calculateur 1 commande une interpolation linéaire entre deux points de mesure situés tout d'abord sur un même profil de la trajectoire puis sur des profils différents. L'obtention d'une carte sur l'écran vidéo 5 sera décrite plus en détail à l'aide des figures 2a, 2b et 2c. Cette interpolation permet d'affecter une couleur à chaque point image de l'écran.

Divers traitements sont ensuite effectués pour corriger l'image de la carte obtenue à partir des résultats bruts. On effectue en particulier une correction d'altitude, un lissage de tout ou partie des points de l'image et une soustraction du bruit de fond.

Le lissage des points de l'image peut être effectué par diverses méthodes classiques de filtrage matriciel par exemple. Il permet d'amortir certaines variations brusques des valeurs affichées.

La soustraction du bruit de fond correspondant à l'activité naturelle moyenne de l'ensemble de la zone survolée, est effectuée pour chaque valeur d'un point de la carte, en soustrayant, soit une valeur calculée à partir du comptage total, soit une valeur calculée à partir du nombre d'impulsions contenues dans des fenêtres de référence. Par ailleurs, pour s'affranchir des variations de bruit de fond, on soustrait également une valeur caractéristique du rapport des contenus de deux fenêtres d'énergie retenues.

La correction d'altitude est effectuée par le calculateur 1 à partir de coefficients d'atténuation. Ces coefficients sont calculés par celui-ci à partir des valeurs de comptage correspondant aux différentes fenêtres et de la valeur de comptage total, représentatives des différentes mesures effectuées au-dessus d'un point particulier suivant un profil vertical. Ainsi, à chaque fenêtre d'énergie et à la totalité de l'activité gamma correspond un coefficient d'atténuation pour la zone considéré ; ce dernier permet de ramener la valeur de comptage de chaque point de l'image, représentative de l'altitude réelle de l'appareil, à une valeur de comptage représentative de l'altitude de référence choisie, à partir d'une loi d'atténuation de la forme :

$$A_h(E) = A_{ho}(E) \, e^{-k(h-ho)}$$

où E est l'énergie du rayonnement, ho l'altitude de référence choisie, h l'altitude réelle de l'appareil de locomotion, $A_{ho}$ la valeur du comptage à l'altitude ho, $A_h$ la valeur du comptage l'altitude h, et k le coefficient d'atténuation calculée.

Une carte correspondant à l'altitude suivie par l'appareil de locomotion aérienne ainsi que des cartes de coefficients de correction obtenues à partir des coefficients d'atténuation peuvent être, bien entendu, tracées sur l'écran à partir des points de mesure implantés sur celui-ci. Ces cartes peuvent être par ailleurs enregistrées en mémoire vive du calculateur et éventuellement dans une mémoire de masse pour être disponibles à chaque correction d'altitude d'une carte de l'activité gamma.

D'autres traitements classiques peuvent être également effectués sur les valeurs brutes pour affiner celles-ci, sans pour autant sortir du cadre de l'invention.

Les cartes couleurs obtenues sur l'écran vidéo représentatives de l'activité gamma de la zone survolée pour les fenêtres d'énergie choisies ou pour la totalité de l'activité gamma de cette zone, ne permettent pas la mise en évidence de faibles anomalies. En effet, l'oeil d'un opérateur n'est pas assez sensible pour choisir des intervalles de valeurs ayant une étendue y faible, autrement dit, pour choisir un grand nombre de couleurs. Aussi, par l'utilisation des moyens de commande 6, l'opérateur peut faire varier de façon continue l'origine N et l'étendue W de la loi de couleurs. Des variations lentes de niveau dans les couleurs permettent ainsi une mise en évidence visuelle d'anomalies, non prévisibles.

Une imprimante 7 couleurs ou noir et blanc, connectée au calculateur 1, permet de tracer, notamment sur papier, des cartes de l'activité gamma, à partir des résultats bruts ou des résultats corrigés. Cette imprimante peut bien entendu être également connectée à l'écran vidéo 5.

A chaque carte d'activité, il est possible de superposer sur l'écran 5 ou sur le papier de l'imprimante 7, une carte topographique 11 de la zone survolée, par l'intermédiaire d'une caméra vidéo 9 qui saisit l'image de cette carte ; le calculateur 1 superpose la carte topographique 11 à la carte d'activité gamma, sur l'écran 5 ou sur le papier, avec les mêmes échelles.

Les figures 2a, 2b et 2c représentent les différentes étapes permettant l'affichage sur l'écran vidéo 5 d'une carte de l'activité gamma pour une fenêtre d'énergie donnée.

La première étape représentée par la figure 2a, consiste à faire apparaître sur cet écran, les différents points de mesure 15, en fonction de leurs coordonnées en X et Y, selon l'ordre dans lequel les mesures ont été effectuées, c'est-à-dire suivant la trajectoire 17 suivie par l'appareil de locomotion aérienne, au-dessus de la zone 19 à contrôler et à corriger éventuellement les positions erronées de certains points, comme on l'a vu précédemment. L'ensemble des points 15 permet de visualiser ainsi la trajectoire effectivement suivie par l'appareil ; celle-ci présente des directions de parcours 20 ou des profils pratiquement parallèles. Les coordonnées en X et Y ont été mesurées à partir d'une zone d'initialisation 21 qui est prise comme point de départ de la trajectoire 17.

La deuxième étape représentée par la figure 2b consiste à affecter à chacun des points de mesure 15 apparaissant sur l'écran vidéo, pour une fenêtre d'énergie donnée, la valeur de comptage correspondant à chaque point, puis à réaliser une interpolation linéaire entre chaque couple de points de mesure successifs pour un même profil 20 sur la trajectoire 17 ; on affecte ainsi des valeurs aux points images de l'écran, placés entre ces points de mesure. On obtient alors, sur l'écran, une visualisation de l'activité gamma, suivant la trajectoire 17 suivie, pour la fenêtre d'énergie donnée. Cette visualisation peut être faite en noir et blanc par différents niveaux de gris, par des caractères comme représenté sur cette figure, ou en couleur .

La figure 2c représente la dernière étape permettant la visualisation d'une carte de l'activité gamma, pour une fenêtre d'énergie donnée. Elle consiste à effectuer une interpolation linéaire entre deux points de la trajectoire appartenant à deux profils 20 successifs, de façon à affecter des valeurs respectives aux points images de l'écran qui ne se trouvent pas sur le tracé de la trajectoire 17. On obtient ainsi une image continue 25 de l'activité gamma de la zone survolée, pour la fenêtre d'énergie donnée.

Ainsi, le procédé de traitement conforme à l'invention permet d'obtenir des cartes de l'activité gamma d'une zone survolée très rapidement c'est-à-dire de l'ordre de 1 à 2 heures pour une zone de quelques km$^2$, tout en utilisant un dispositif facile à mettre en oeuvre et à transporter.

**Revendications**

1. Procédé d'obtention de cartes représentatives de l'activité gamma d'une zone géographique (19), à partir de données enregistrées, acquises par des moyens d'acquisition à bord d'un appareil de locomotion aérienne, pour différents points (15) d'une trajectoire (17) de l'appareil balayant cette zone, selon des directions approximativement parallèles, ces données comprenant, pour chaque point d'acquisition, des données relatives aux coordonnées de positionnement et à l'altitude de l'appareil dans un repère de référence X, Y, Z et des données de mesures spectrométriques de l'activité gamma, ce procédé consistant à :
   - lire les données enregistrées grâce à des moyens (3) de lecture reliés à des moyens de traitement (1) ;
   - visualiser sur un écran vidéo (5), relié aux moyens de traitement (1), des données spectrométriques lues donnant le nombre d'impulsions en fonction de l'activité gamma pour chaque point d'acquisition (15) positionné selon ses coordonnées dans le repère de référence ;
   - déterminer un nombre déterminé de fenêtres d'énergie ;
   - effectuer, à partir des données lues et par les moyens de traitement pour chaque point d'acquisition, le comptage du nombre d'impulsions contenues dans chaque fenêtre déterminée et le comptage total du nombre d'impulsions correspondant à l'ensemble de l'activité gamma en ce point ;
   - enregistrer par des moyens d'enregistrement, pour chaque point d'acquisition, une partie des données de position et d'altitude lues, la valeur de comptage correspondant aux fenêtres déterminées et la valeur de comptage totale ;
   - affecter à chaque point d'acquisition la valeur de comptage obtenue pour une des fenêtres déterminées ou la valeur de comptage totale correspondant à ce point, à partir d'une loi de couleurs, ladite loi permettant d'attribuer une couleur différente à différents intervalles de valeurs de comptage choisis ; et
   - interpoler, par les moyens de traitement (1), les valeurs de comptage entre les points d'acquisition se trouvant sur un même profil (20) de la trajectoire de l'appareil et se trouvant sur des profils (20) différents de la trajectoire, pour obtenir une image continue ; caractérisé en ce qu'il consiste en outre :

- à déterminer ledit nombre déterminé de fenêtres d'énergie à partir de la visualisation de données spectrométriques affichées sur l'écran vidéo, chaque fenêtre correspondant au plus au rayonnement gamma d'un radio-élément ;
- à positionner les points d'acquisition sur l'écran vidéo, par leurs coordonnées en X et Y dans le repère de référence ;
- à enregistrer par lesdits moyens d'enregistrement, pour chacun desdits points d'acquisition, une partie des données compactées de position et d'altitude lues, à affecter à chacun desdits points d'acquisition sur l'écran vidéo ladite valeur de comptage à partir de ladite loi de couleurs, à interpoler lesdites valeurs de comptage linéairement pour produire ladite image continue sur ledit écran vidéo ; et
- à effectuer des corrections d'altitude à chaque point de l'image obtenue, à partir d'un coefficient d'atténuation calculé par les moyens de traitement à partir de données enregistrées à bord de l'appareil au cours du survol d'un point d'acquisition suivant un profil vertical, ledit coefficient étant calculé pour chaque fenêtre d'énergie déterminée et pour l'ensemble de l'activité gamma en ce point et permettant de ramener les valeurs affectées aux points de l'image correspondant à l'altitude réelle de l'appareil à des valeurs correspondant à une altitude de référence choisie.

2. Procédé d'obtention de cartes selon la revendication 1, caractérisé en ce qu'on soustrait aux valeurs affectées aux points de l'image des valeurs correspondant à la radioactivité naturelle de la zone survolée.

3. Procédé d'obtention de cartes selon la revendication 2, caractérisé en ce que les valeurs correspondant à la radioactivité naturelle de la zone survolée sont calculées par les moyens de traitement à partir du nombre d'impulsions contenues dans des fenêtres de référence prises parmi les fenêtres déterminées et représentatives de la radioactivité naturelle.

4. Procédé d'obtention de cartes selon l'une quelconque des revendications 1 et 3, caractérisé en ce qu'on effectue un lissage de toutes les valeurs ou partie des valeurs affectées aux points de l'image.

5. Procédé d'obtention de cartes selon l'une quelconque des revendications 1 à 4, caractérisé en ce qu'une couleur étant affectée à chaque point de l'image suivant la loi de couleurs choisie, on fait varier ladite loi par des moyens de commande (6) reliés aux moyens de traitement.

6. Dispositif pour la mise en oeuvre du procédé selon l'une quelconque des revendications 1 à 5, comportant :
- des moyens de traitement (1) de données enregistrées sur l'activité gamma d'une zone géographique (19), acquises par des moyens d'acquisition à bord d'un appareil de locomotion aérienne, pour différents points (15) d'acquisition de la trajectoire (17) de l'appareil, ces données comprenant pour chaque point des données correspondant aux coordonnées de positionnement et à l'altitude de l'appareil dans un repère de référence X, Y, Z et des données spectrométriques de l'activité gamma correspondant à un nombre d'impulsions en fonction de l'activité gamma en chaque point d'acquisition, ces moyens de traitement (1) permettant d'obtenir la répartition de l'activité gamma de la zone (19) survolée pour une fenêtre d'énergie donnée ou pour l'ensemble de l'activité gamma, chaque point d'acquisition étant affecté de la valeur de comptage obtenue pour la fenêtre déterminée ou de la valeur de comptage totale en ce point, en relation avec une loi de couleurs permettant d'attribuer respectivement différentes couleurs à différents intervalles choisis de valeurs de comptage, les moyens de traitement (1) effectuant une interpolation des valeurs de comptage entre les points d'acquisition se trouvant sur un même profil (20) de la trajectoire de l'appareil et les points se trouvant sur des profils différents de la trajectoire, pour obtenir une image continue ;
- des moyens (3) pour lire les données enregistrées et pour enregistrer des données traitées par les moyens de traitement (1) à partir des données lues, les moyens (3) pour lire et pour enregistrer étant connectés aux moyens de traitement (1) ;
- des moyens de visualisation vidéo (5) pour visualiser des données spectrométriques lues et pour afficher des cartes de l'activité gamma de la zone survolée, ces moyens (5) étant connectés aux moyens de traitement (1) ;

- des moyens de commande (6) reliés aux moyens de traitement (1) ;
- une imprimante (7) ; et
- une caméra vidéo (9) reliée aux moyens de traitement (1) pour saisir l'image d'une carte topographique (11) de la zone (19) survolée et pour superposer cette carte (11) aux cartes de l'activité gamma de la zone (19) survolée ; caractérisé en ce que les moyens de commande (6) reliés aux moyens de traitement (1) font varier les couleurs de l'écran vidéo, en ce que les moyens de traitement (1) effectuent un compactage des données de positionnement et d'altitude préalablement à leur enregistrement, et en ce que ladite interpolation est une interpolation linéaire apportant ladite image continue sur l'écran (5) des moyens de visualisation vidéo, et/ou sur l'imprimante (7).

7. Dispositif selon la revendication (6), caractérisé en ce que les moyens de traitement (1) comportent un micro-ordinateur, une mémoire de micro-ordinateur constituant au moins une partie des moyens d'enregistrement (3).

8. Dispositif selon l'une quelconque des revendications 6 et 7, caractérisé en ce qu'il comprend en outre au moins une imprimante (7) connectée aux moyens de traitement (1) pour tracer des cartes de l'activité gamma de la zone (19) survolée.

## Claims

1. Method for obtaining maps representing the gamma activity of a geographical zone (19), from recorded data acquired by acquisition means on board an aerial-transport craft, for various points (15) of a path (17) of the craft scanning this zone along approximately parallel directions, these data comprising, for each acquisition point, data relating to the position coordinates and to the altitude of the craft in a reference frame X, Y, Z and data from spectrometric measurements of the gamma activity, this method consisting in:
   - reading the recorded data by virtue of reading means (3) connected to processing means (1);
   - visualizing on a video screen (5), connected to the processing means (1), spectrometric data read giving the number of pulses as a function of the gamma activity for each acquisition point (15) located according to its coordinates in the reference frame;
- specifying a specified number of energy windows;
- carrying out, from the data read and via the processing means for each acquisition point, the counting of the number of pulses contained in each specified window and the overall counting of the number of pulses corresponding to the totality of the gamma activity at this point;
- recording via recording means, for each acquisition point, part of the read position and altitude data, the count value corresponding to the specified windows and the overall count value;
- assigning to each acquisition point the count value obtained for one of the specified windows or the overall count value corresponding to this point, on the basis of a law of colours, the said law enabling a different colour to be allocated to various selected count value intervals; and
- interpolating, via the processing means (1), the count values between the acquisition points lying on a common profile (20) of the path of the craft and lying on different profiles (20) of the path, in order to obtain a continuous image; characterized in that it consists in addition:
- in specifying the said specified number of energy windows on the basis of the visualization of spectrometric data displayed on the video screen, each window corresponding at most to the gamma radiation from one radio isotope;
- in locating the acquisition points on the video screen via their X and Y coordinates in the reference frame;
- in recording via the said recording means, for each of the said acquisition points, part of the compacted read position and altitude data, in assigning, on the basis of the said law of colours, the said count value to each of the said acquisition points on the video screen, in linearly interpolating the said count values in order to produce the said continuous image on the said video screen; and
- in carrying out altitude corrections at each point of the image obtained, on the basis of an attenuation coefficient calculated by the processing means from data recorded on board the craft in the course of overflying an acquisition point in accordance with a vertical profile, the said coefficient being calculated for each specified energy window and for the totality of the gamma activity at this point, and enabling the values assigned to the points of the image corresponding to the actual altitude of the craft to be reduced to values corresponding to a selected reference altitude.

2. Method for obtaining maps according to Claim 1, characterized in that values corresponding to the natural radioactivity of the overflown zone are taken away from the values assigned to the points of the image.

3. Method for obtaining maps according to Claim 2, characterized in that the values corresponding to the natural radioactivity of the overflown zone are calculated by the processing means on the basis of the number of pulses contained in reference windows chosen from the specified windows which represent the natural radioactivity.

4. Method for obtaining maps according to either of Claims 1 and 3, characterized in that a smoothing is carried out of all the values or a part of the values assigned to the points of the image.

5. Method for obtaining maps according to any one of Claims 1 to 4, characterized in that, one colour being assigned to each point of the image in accordance with the selected law of colours, the said law is varied by control means (6) connected to the processing means.

6. Device for implementing the method according to any one of Claims 1 to 5, comprising:
   - means (1) for processing recorded data on the gamma activity of a geographical zone (19), acquired by acquisition means on board an aerial-transport craft, for various acquisition points (15) of the path (17) of the craft, these data comprising, for each point, data corresponding to the position coordinates and to the altitude of the craft in a reference frame X, Y, Z and spectrometric data of the gamma activity corresponding to a number of pulses as a function of the gamma activity at each acquisition point, these processing means (1) enabling the distribution of the gamma activity of the overflown zone (19) to be obtained for a given energy window or for the totality of the gamma activity, each acquisition point being assigned with the count value obtained for the specified window or with the overall count value at this point, in connection with a law of colours enabling various colours to be allocated respectively to various selected intervals of count values, the processing means (1) carrying out an interpolation of the count values between the acquisition points lying on a common profile (20) of the path of the craft and the points lying on different profiles of the path, in order to obtain a continuous image;
   - means (3) for reading the recorded data and for recording data processed by the processing means (1) from the data read, the means (3) for reading and for recording being connected to the processing means (1);
   - video visualization means (5) for visualizing spectrometric data read and for displaying maps of the gamma activity of the overflown zone, these means (5) being connected to the processing means (1);
   - control means (6) connected to the processing means (1);
   - a printer (7); and
   - a video camera (9) connected to the processing means (1) for capturing the image of a topographical map (11) of the overflown zone (19) and for superimposing this map (11) onto the maps of the gamma activity of the overflown zone (19);
   characterized in that the control means (6) connected to the processing means (1) vary the colours of the video screen, in that the processing means (1) carry out a compaction of the position and altitude data prior to their being recorded, and in that the said interpolation is a linear interpolation conveying the said continuous image onto the screen (5) of the video visualization means, and/or onto the printer (7).

7. Device according to Claim 6, characterized in that the processing means (1) comprise a microcomputer, a microcomputer memory constituting at least part of the recording means (3).

8. Device according to either of Claims 6 and 7, characterized in that it comprises in addition at least one printer (7) connected to the processing means (1), for plotting maps of the gamma activity of the overflown zone (19).

**Ansprüche**

1. Verfahren zum Erhalten von Karten, die die Gammaaktivität eines geographischen Bereichs (19) ausgehend von aufgenommenen Daten darstellen, die durch Erfassungsvorrichtungen an Bord eines Luftfahrzeugs für verschiedene Punkte (15) einer Trajektorie (17) des Fahrzeugs, das diesen Bereich entlang im wesentlichen paralleler Richtungen überstreicht, erfaßt werden, wobei diese Daten für jeden Erfassungspunkt Daten bezüglich der Positionskoordinaten und bezüglich der Höhe des Fahrzeugs in einem Bezugskoordinatensystem X, Y, Z und spektrometrische Meßdaten für die Gammaaktivität umfassen, wobei dieses Verfahren darin besteht:
   - die aufgenommenen Daten mittels einer mit einer Verarbeitungsvorrichtung (1) verbundenen Lesevorrichtung (3) zu lesen;
   - die eingelesenen Daten, die die Impulszahlen als Funktion der Gammaaktivität für jeden entsprechend seinen Koordinaten in dem Bezugssystem angeordneten Erfassungspunkt (15) angeben, auf einem mit der Verarbeitungsvorrichtung (1) verbundenen Videoschirm (5) darzustellen;
   - eine bestimmt Anzahl von Energiefenstern anzugeben;
   - ausgehend von den eingelesenen Daten und mittels der Verarbeitungsvorrichtung das Abzählen der Impulszahlen, die in jedem bestimmten Fenster enthalten sind, und das Abzählen der Gesamtpulszahl, die der Gammaaktivität in diesem Punkt entspricht, durchzuführen;
   - für jeden Erfassungspunkt mittels einer Aufnahmevorrichtung einen Teil der eingelesenen Positions- und Höhendaten, den Zähl wert, der den bestimmten Fenstern entspricht, und den Gesamtzählwert aufzunehmen;
   - jedem Erfassungspunkt den Zähl wert für eines der bestimmten Fenster oder den Gesamtzählwert, der diesem Punkt entspricht, ausgehend von einer Farbregel zuzuweisen, wobei diese Regel ermöglicht, verschiedenen Zähl wertintervallen eine unterschiedliche Farbe zuzuordnen; und
   - mittels der Bearbeitungsvorrichtung (1) die Zählwerte zwischen den Erfassungspunkten, die sich auf einem selben Profil (20) der Trajektorie des Fluggeräts befinden, und denen, die sich auf verschiedenen Profilen (20) der Trajektorie befinden, zu Interpolieren, um ein kontinuierliches Bild zu erhalten; dadurch gekennzeichnet, daß es außerdem darin besteht:
   - die bestimmte Zahl von Energiefenstern ausgehend von der Betrachtung der spektrometrischen Daten, die auf dem Videoschirm angezeigt werden, zu bestimmen, wobei jedes Fenster höchstens der Gammastrahlung eines Radioelements entspricht;
   - die Erfassungspunkte auf dem Videoschirm durch ihre X, Y-Koordinaten im Bezugssystem zu Positionieren;
   - mittels der Aufnahmevorrichtung für jeden der Erfassungspunkte einen Teil der eingelesenen, komprimierten Positions- und Höhendaten aufzunehmen, jedem der Erfassungspunkte auf dem Videoschirm den Zählwert ausgehend von der Farbregel zuzuweisen und die Zählwerte linear zu Interpolieren, um das kontinuierliche Bild auf dem Videoschirm zu erzeugen; und
   - Höhenkorrekturen für jeden erhaltenen Bildpunkt ausgehend von einem mittels der Bearbeitungseinheit ausgehend von an Bord des Fluggeräts während des Überflugs über einen Erfassungspunkt entlang einem vertikalen Profil berechneten Abschwächungskoeffizienten durchzuführen, wobei dieser Koeffizient für jedes bestimmte Energiefenster und für die Gesamtheit der Gammaaktivität in diesem Punkt berechnet wird und ermöglicht, die den Bildpunkten, die der reellen Flughöhe des Fluggeräts entsprechen, zugewiesenen Werte auf die Werte, die einer ausgewählten Bezugshöhe entsprechen, zurückzuführen.

2. Verfahren zum Erhalten von Karten nach Anspruch 1, dadurch gekennzeichnet, daß man von den den Bildpunkten zugewiesenen Werten Werte, die der natürlichen Radioaktivität der überflogenen Region entsprechen, abzieht.

3. Verfahren zum Erhalten von Karten nach Anspruch 2, dadurch gekennzeichnet, daß die Werte, die der natürlichen Radioaktivität der überflogenen Region entsprechen, mittels der Bearbeitungseinheit ausgehend von der in Referenzfenstern, die unter den bestimmten Fenstern ausgewählt werden und repräsentativ für die natürliche Radioaktivität sind, enthaltenen Impulszahl berechnet werden.

4. Verfahren zum Erhalten von Karten nach einem der Ansprüche 1 und 3, dadurch gekennzeichnet, daß man eine Glättung aller Werte oder eines Teils der Werte, die einem Bildpunkt zugeordnet sind, durchführt.

5. Verfahren zum Erhalten von Karten nach einem der Ansprüche 1 bis 4, dadurch gekennzeichnet, daß man, während eine Farbe jedem Bildpunkt entsprechend der gewählten Farbregel zugeordnet ist, die Regel durch eine mit der Bearbeitungsvorrichtung verbundenen Steuerungsvorrichtung (6) variiert.

6. Vorrichtung zum Ausführen des Verfahrens nach einem der Ansprüche 1 - 5 mit:
   - einer Verarbeitungsvorrichtung (1) für über die Gammaaktivität einer geographischen Region (19) aufgenommene Daten, die durch Erfassungsvorrichtungen an Bord eines Luftfahrzeugs für verschiedene Punkte (15) der Trajektorie (17) des Fahrzeugs erfaßt werden, wobei diese Karten für jeden Datenpunkt den Positionskoordinaten und der Höhe des Fluggeräts in einem Bezugssystem X, Y, Z entsprechende Daten und spektrometrische Daten über die Gammaaktivität, die einer Impulszahl als Funktion der Gammaaktivität in jedem Erfassungspunkt entspricht, umfassen, wobei die Verarbeitungsvorrichtung (1) ermöglicht, die Aufteilung der Gammaaktivität in der überflogenen Region (19) für ein gegebenes Energiefenster oder für die Gesamtheit der Gammaaktivität zu erhalten, wobei jeder Erfassungspunkt mit dem Zählwert für das gegebene Fenster oder mit dem Gesamtzählwert in diesem Punkt in Verbindung mit einer Farbregel versehen ist, die ermöglicht, jeweils verschiedene Farben verschiedenen Intervallen von Zählwerten zuzuweisen, wobei die Bearbeitungsvorrichtung (1) eine Interpolation der Zählwerte zwischen den Erfassungspunkten, die sich auf einem selben Profil (20) der Trajektorie des Fluggeräts befinden und den Punkten, die sich auf unterschiedlichen Profilen der Trajektorie befinden, durchführt, um ein kontinuierliches Bild zu erhalten;
   - einer Vorrichtung (3) zum Lesen der aufgenommenen Daten und zum Aufnehmen von von der Bearbeitungsvorrichtung (1) ausgehend von den gelesenen Daten bearbeiteten Daten, wobei die Vorrichtung (3) zum Lesen und Aufnehmen mit der Verarbeitungsvorrichtung (1) verbunden ist;
   - einer Videodarstellungsvorrichtung (5) zum Darstellen der gelesenen, spektrometrischen Daten und zum Anzeigen der Karten der Gammaaktivität der überflogenen Region, wobei diese Vorrichtung (5) mit der Verarbeitungsvorrichtung (1) verbunden ist;
   - einer mit der Verarbeitungsvorrichtung (1) verbundenen Steuerungsvorrichtung (6);
   - einem Drucker (7); und
   - einer mit der Verarbeitungsvorrichtung (1) verbundenen Videokamera, um das Bild einer topographischen Karte (11) der überflogenen Region (19) zu erfassen und diese Karte (11) den Karten der Gammaaktivität der überflogenen Region (19) zu überlegen; dadurch gekennzeichnet, daß die mit der Verarbeitungsvorrichtung (1) verbundene Steuerungsvorrichtung (6) die Farben auf dem Videoschirm variiert, daß die Verarbeitungsvorrichtung (1) eine Komprimierung der Positions- und Höhendaten vor ihrer Aufnahme durchführt und daß die Interpolation eine lineare Interpolation ist, die das kontinuierliche Bild auf den Schirm (5) der Videodarstellungsvorrichtung und/oder auf den Drucker (7) bringt.

7. Vorrichtung nach Anspruch 6, dadurch gekennzeichnet, daß die Verarbeitungsvorrichtung (1) einen Mikrocomputer umfaßt, wobei ein Mikrocomputer-Speicher wenigstens einen Teil der Aufnahmevorrichtung (3) bildet.

8. Vorrichtung nach einem der Ansprüche 6 und 7, dadurch gekennzeichnet, daß sie außerdem wenigstens einen mit der Verarbeitungsvorrichtung (1) verbundenen Drucker zum Zeichnen der Gammaaktivität der überflogenen Region (19) umfaßt.

FIG.1

FIG.2a

# FIG.2b

# FIG. 2c